# EUROPEAN PATENT APPLICATION

(11) **EP 3 029 615 A1**
(43) Date of publication of application: **08.06.2016**
(21) Application number: 15000594.0
(22) Date of filing: 02.03.2015
(51) Int. Cl.: G06Q 10/02, G06Q 30/02, G06Q 50/14

(54) **Interacting with a database storing discounts**

(30) Priority: 01.12.2014 US 201414556707
(71) Applicant: Amadeus S.A.S., 06410 Biot (FR)
(72) Inventor: Muharemovic, Amar, 06600 Antibes (FR); Pasquini, Ilaria, 06220 Vallauris (FR); Alles, Irina, 06250 Mougins (FR); Colin, Jeremy, 06300 Nice (FR); Sabatier, Romuald, 83170 (FR)
(74) Representative: Samson & Partner Patentanwälte mbB

(57) **Abstract**

Methods, systems, and computer program products for pricing a fare for a travel segment. A discount database is maintained that includes a discount associated with a condition. Data elements associated with a booking file are received. The data elements include data identifying a passenger and data regarding the travel segment. In response to the receipt of the data elements, the discount database is automatically accessed to retrieve the condition associated with the discount. The condition is automatically evaluated based on the data elements to determine whether the discount is applicable to price the fare. If the condition is satisfied, the data elements are updated to include a reference related to the discount.

## Description

### BACKGROUND

The invention generally relates to computers, databases, and computer systems and, in particular, to methods, systems, and computer program products for interacting with and managing a database storing discounts.

Computer technology is used in the travel industry to manage and support travel reservations, as well as the associated data. In particular, reservation agents (i.e., travel agencies) may book travel by remotely interfacing with a reservation system that in turn interfaces with inventory systems of one or more travel merchants (e.g., airlines, rail travel providers, bus travel providers, etc.) to book one or more travel inventory items from the one or more travel merchants. The reservation agent may create and/or modify a Passenger Name Record (PNR) with a travel reservation device (e.g., a terminal used by a travel agent) to initialize a reservation session with the reservation system and thereby book a travel solution for a customer associated with the PNR.

As some point during the booking process, the travel agent may generate a pricing query that is addressed by a pricing system. The pricing system may apply discounts to price an itinerary and reply with priced travel solutions. Discounts may relate to, for example, the age of the passenger, the type of passenger, the number of passengers in a group, or a market of the travel provider. Discounts may permit the customer to book travel with reduced pricing. Excessively high trip prices at the time of booking that omit a potential fare discount may prompt a potential customer to make alternative travel arrangements or to even forgo taking the trip altogether. As a result, a travel provider may lose a sale.

In the airline industry, for example, a booking agent may be required to manually enter the fare discounts into the booking file before the itinerary is priced. If a discount is omitted at the time of pricing, the pricing will not reflect the discount despite the passenger being otherwise eligible for the discount. Further, the booking agent must remember all the available discounts and determine whether the data elements in the booking file satisfy the one or more conditions associated with each potential discount. Similarly, a customer using a web interface or interacting directly with a travel provider to price an itinerary must enter all of the information that could generate a discount. However, the customer may not be aware that certain optional information must be disclosed to qualify for a particular discount or the web interface may not be equipped to permit the entry of the optional information. For example, the web interface used to book a flight may not prompt the passenger for the passenger's military service history, yet a discount may exist for military service personnel. Thus, the passenger cannot receive the military discount because the required information is absent when the fare price is computed.

Improved systems, methods, and computer program products for interacting with and managing a database storing discounts are needed.

### SUMMARY

Embodiments of the invention generally comprise methods, systems, and computer program products for pricing a fare for a travel segment. Consistent with embodiments of the invention, a discount database is maintained that includes a discount associated with a condition. Data elements associated with a booking file are received. The data elements include data identifying a passenger and data regarding the travel segment. In response to the receipt of the data elements, the discount database is automatically accessed to retrieve the condition associated with the discount. The condition is automatically evaluated based on the data elements to determine whether the discount is applicable to price the fare. If the condition is satisfied, the data elements are updated to include a reference related to the discount.

### BRIEF DESCRIPTION OF THE SEVERAL VIEWS OF THE DRAWINGS

The accompanying drawings, that are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a central server in communication with a computer device via a network.
FIG. 2 is a diagrammatic view of an exemplary computer system of FIG. 1.
FIG. 3 is a schematic view of a pricing system, including a pricing engine and an automatic discount module.
FIG. 4 is a graphical view of an exemplary passenger name record.
FIG. 5 is a graphical view of an exemplary discount catalog.
FIG. 6 is a graphical view of an exemplary set of actions and corresponding data flow between a booking agent, central server, automatic discount module, and pricing engine.
FIG. 7 is a flowchart of a discount identification process that may be performed by the pricing system of FIG. 3.

### DETAILED DESCRIPTION

Embodiments of the invention are directed to methods and systems for pricing a fare of an itinerary for a passenger to travel along a segment. Embodiments of the invention may be implemented by a pricing system comprising one or more networked computers or servers. The networked computers may be operated by a Global Distribution System (GDS) and may provide processing and database functions for travel-related systems and modules that price passenger fares.

The pricing system may include a discount identification module for use in automatically determining whether the passenger is eligible for any available discounts after the mandatory data (e.g., passenger name and segments of an itinerary) is specified by a travel agent (and potentially with an availability request and subsequent selection of the segments) and before pricing is invoked. The discount identification module retrieves fare discounts and the conditions associated with each fare discount from a discount catalog. The discount identification module thereafter reviews each discount and the associated conditions with respect to the data elements supplied from the booking file to determine whether the passenger is eligible for the fare discount. Some fare discounts may be determined to be applicable, some fare discounts may be determined to not be applicable, and the applicability of other fare discounts may be indeterminate.

If the discount identification module determines that the passenger is eligible for a particular discount, the discount or a reference identifier for the discount is entered into the booking file. Conversely, if the discount identification module determines the data elements of the booking file do not satisfy the conditions associated with a particular fare discount, the discount identification module continues on to evaluate another discount. The applicable and potentially applicable fare discounts are provided to the central server, which determines whether the conditions of potentially applicable fare discounts are applicable based on the data elements comprising the entire content of the booking file. The central system may modify the booking file to include applicable fare discounts and potentially applicable fare discounts. When the booking file is communicated to the passenger or the booking agent, additional information may be gathered to make a final determination that resolves the applicability of the potentially applicable fare discounts.

The pricing system may include a pricing engine that receives data from a booking file associated with a passenger. The booking file includes a plurality of data elements relating to the itinerary for the passenger. The pricing engine may be configured to price a fare based on travel segments and fare discounts in the booking file. After the pricing engine prices the fare, a central server associated with the pricing system may create a transitional stored ticket incorporating the determined fares therein. The transitional stored ticket reserves a space on the underlying travel segment for the passenger to ensure the passenger can rely on the priced fare when finalizing the booking process. The pricing by the pricing system may be unchanged by the introduction of the discount identification module into the process flow.

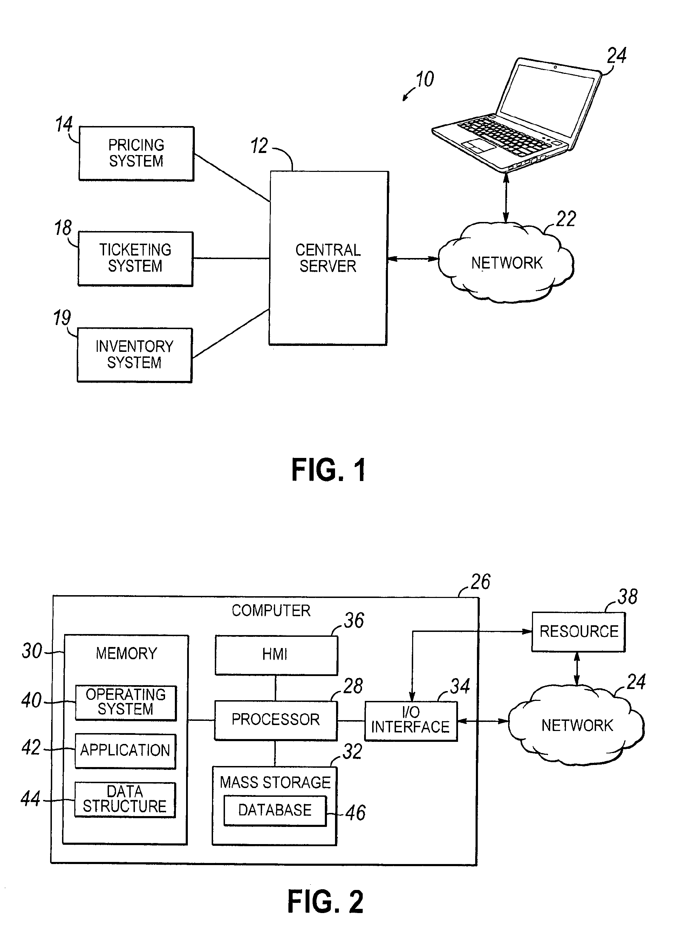

Referring now to FIG. 1, an operating environment 10 in accordance with an embodiment of the invention may include or reside within a central server 12, which may be located at a global distribution system (GDS). The central server 12 facilitates automated transactions between third parties and booking agents in order to provide travel-related services to end consumers. The central server 12 can link services, rates and bookings consolidating products and services across multiple travel sectors, for example, airline reservations, hotel reservations, car rentals, and activities. Operating environment 10 may further include a pricing engine 14, a ticketing system 18 and an inventory system 19. The central server 12, pricing system 14, ticketing system 18 and inventory system 19 may communicate with each other through a network 22. Network 22 may include one or more private or public networks (e.g. the Internet) that enable the exchange of data.

Referring now to FIG. 2, the central server 12, pricing system 14, ticketing system 18 and inventory system 19 of operating environment 10 may be implemented on one or more computer devices or systems, such as exemplary computer system 26. The computer system 26 may include a processor 28, a memory 30, a mass storage memory device 32, an input/output (I/O) interface 34, and a Human Machine Interface (HMI) 36. The computer system 26 may also be operatively coupled to one or more external resources 38 via the network 22 or I/O interface 34. External resources may include, but are not limited to, servers, databases, mass storage devices, peripheral devices, cloud-based network services, or any other suitable computer resource that may used by the computer system 26.

The processor 28 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 30. Memory 30 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 32 may include data storage devices such as a hard drive, optical drive, tape drive, non-volatile solid state device, or any other device capable of storing information.

Processor 28 may operate under the control of an operating system 40 that resides in memory 30. The operating system 40 may manage computer resources so that computer program code embodied as one or more computer software applications, such as an application 42 residing in memory 30, may have instructions executed by the processor 28. In an alternative embodiment, the processor 28 may execute the application 42 directly, in which case the operating system 40 may be omitted. One or more data structures 44 may also reside in memory 30, and may be used by the processor 28, operating system 40, or application 42 to store or manipulate data.

The I/O interface 34 may provide a machine interface that operatively couples the processor 28 to other devices and systems, such as the network 22 or external resource 38. The application 42 may thereby work cooperatively with the network 22 or external resource 38 by communicating via the I/O interface 34 to provide the various features, functions, applications, processes, or modules comprising embodiments of the invention. The application 42 may also have program code that is executed by one or more external resources 38, or otherwise rely on functions or signals provided by other system or network components external to the computer system 26. Indeed, given the nearly endless hardware and software configurations possible, persons having ordinary skill in the art will understand that embodiments of the invention may include applications that are located externally to the computer system 26, distributed among multiple computers or other external resources 38, or provided by computing resources (hardware and software) that are provided as a service over the network 22, such as a cloud computing service.

The HMI 36 may be operatively coupled to the processor 28 of computer system 26 in a known manner to allow a user to interact directly with the computer system 26. The HMI 36 may include video or alphanumeric displays, a touch screen, a speaker, and any other suitable audio and visual indicators capable of providing data to the user. The HMI 36 may also include input devices and controls such as an alphanumeric keyboard, a pointing device, keypads, pushbuttons, control knobs, microphones, etc., capable of accepting commands or input from the user and transmitting the entered input to the processor 28.

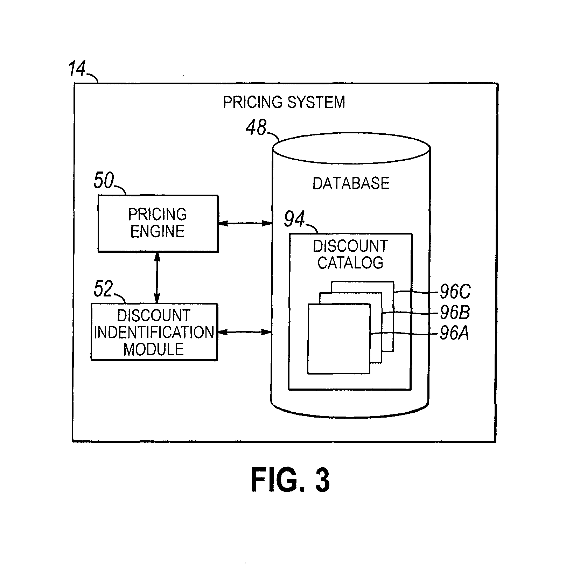

A database 46 may reside on the mass storage memory device 32, and may be used to collect and organize data used by the various systems and modules described herein. The database 46 may include data and supporting data structures that store and organize the data. In particular, the database 46 may be arranged with any database organization or structure including, but not limited to, a relational database, a hierarchical database, a network database, or combinations thereof. A database management system in the form of a computer software application executing as instructions on the processor 28 may be used to access the information or data stored in records of the database 46 in response to a query, where a query may be dynamically determined and executed by the operating system 40, other applications 42, or one or more modules. In an embodiment of the invention, the database 46 may comprise a database 48 (FIG. 3) containing discount pricing data that provides information relating to discounts offered and available to passengers when pricing a fare for travel along a segment of a travel itinerary.

Referring now to FIGS. 1 and 3, the pricing system 14 may coordinate with or utilize information stored or provided by one or more of the central server 12, the ticketing system 18, the inventory system 19 or any other suitable computer system, or any combination thereof. The central server 12, the ticketing system 18 and the inventory system 19 provide various travel carrier services related to supporting and enhancing of the operations of the travel carrier. For example, the ticketing system 18 provides information regarding the passenger's tickets and electronic miscellaneous documents (EMDs). Further, inventory system 19 provides information regarding the inventory of air carriers serving as travel providers, as well as the availability of other transportation services such as buses and trains. Inventory system 19 may further provide information relating to the availability of travel providers such as hotels and car rental agencies.

Referring now to FIG. 3, the pricing system 14 may receive data characterizing a request to price an itinerary and data identifying one or more discounts applicable to price to a travel segment of the itinerary. The pricing system 14 may include a pricing engine 50 and a discount identification module 52.

The pricing engine 50 is configured to receive data elements from a booking file associated with a passenger and to price the travel itinerary of the booking file. In an embodiment of the invention, pricing engine 50 is configured to determine a price from a base fare for the travel segments of the itinerary while considering all fare discounts stored in the booking file. Pricing engine 50 will only consider a fare discount when determining the price if the fare discount or a reference identifier to the fare discount is stored in the booking file.

The discount identification module 52 is configured to receive data elements from the booking file and to evaluate and consider any available fare discounts for their applicability with respect to the received data elements from the booking file. For example, the data elements supplied to the discount identification module 52 may include the passenger name, details relating to one or more of the travel segments in the itinerary, and optionally the passenger date of birth. The discount identification module 52 collects available fare discounts and iteratively evaluates the conditions or inference rules associated with each fare discount to determine whether the data elements of the booking file supplied to it by the central server 12 satisfy the conditions. If discount identification module 52 determines the one or more conditions of a particular fare discount are fully satisfied or potentially satisfied or indeterminately satisfied, discount identification module 52 provides the fare discount to central server 12, which may store the fare discount or a reference identifier to the discount in the booking file for later use by pricing engine 50 and/or travel agent in pricing the fare.

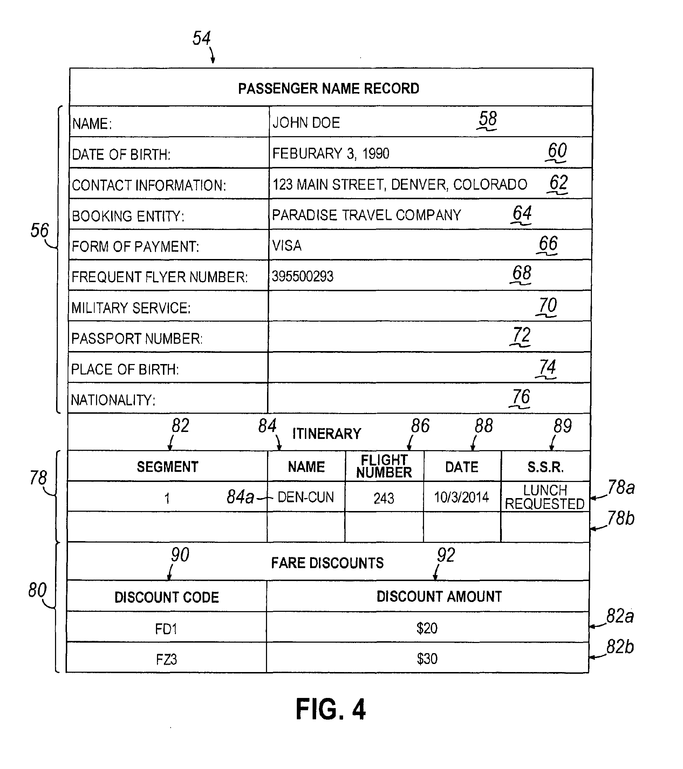

The booking file includes a plurality of data elements associated with the passenger and the passenger's travel itinerary. Referring now to FIGS. 1 and 4, the booking file may be embodied in a passenger name record 54 created by a booking agent using a computing device 24 and in interaction during a session with the central server 12. FIG. 4 provides a diagrammatic representation of an embodiment of passenger name record 54 and is configured and formatted for exemplary purposes with respect to embodiments of the present invention. Passenger name record 54 may include a plurality of data elements 56 characterizing information about the passenger and a travel itinerary of the passenger. Passenger name record 54 may include a name field 58, a date of birth field 60, a contact information field 62, a booking entity field 64, a form of payment field 66, a frequent flyer number field 68, a military service field 70, a passport number field 72, a place of birth field 74, a nationality field 76, an itinerary section 78, a fare discount section 80, and any other data elements that may be required or useful to the underlying travel carrier, booking agent, or passenger.

Itinerary section 78 may include multiple rows 78a, 78b with each row representing a travel segment in the itinerary associated with passenger name record 54. Each of the rows 78a, 78b may include a segment identifier field 82, a segment name field 84, a flight number field 86, a flight date field 88, and a special service request (SSR) field. For exemplary purposes, each travel segment is described as an airline flight. However, travel segments in the itinerary section 78 may be provided by bus, automobile, train, boat, or any other mode of transport. Segment identifier field 82 includes information relating a reference code or identifier associated with the segment of characterized by that particular row. Segment name field 84 includes information relating to a name associated with the segment. Segment name field 84 may include two reference codes indicating the departure city code or airport code of the segment and the arrival city code or airport code of the segment. Referring to segment name field 84a, "DEN-CUN" indicates the associated segment departs from Denver International Airport (DEN) in Denver, United States, and arrives at Cancun International Airport (CUN) in Cancun, Mexico. Flight number field 86 provides the flight number associated with the segment and flight date field 88 indicates the date of the flight represented by the row. Special service request field 89 holds any special services requested by the passenger.

The fare discount section 80 includes multiple rows 82a, 82b, with each row representing a discount associated with passenger name record 54. Each row includes a discount code field 90 and a discount amount field 92. Discount code field 90 includes a reference identifier to a particular fare discount.

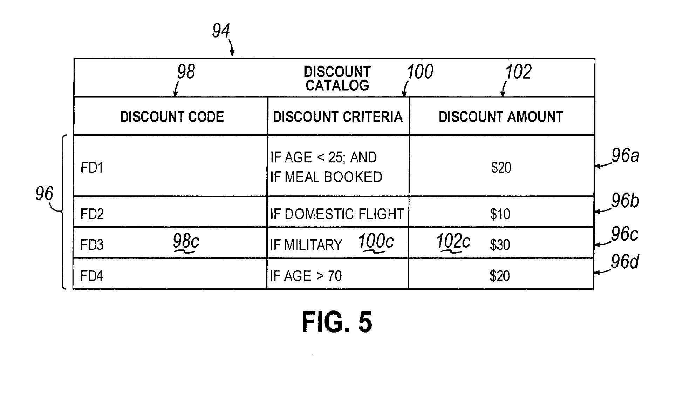

Referring now to FIG. 3, the database 48 of pricing system 14 may include a discount catalog 94 that stores and maintains a list of fare discounts available for use in pricing a fare. Discount catalog 94 is accessible by pricing engine 50 and discount identification module 52. Referring now to FIG. 5, a pseudo-database table representing discount catalog 94 may include multiple rows, with each row representing a fare discount 96. Each fare discount 96 includes a discount code field 98, a discount criteria or discount condition field 100, and a discount amount field 102. Discount code field 98 is configured for use in referencing the associated fare discount 96; discount condition field 100 contains at least one condition and is configured for use in determining the applicability of the associated fare discount 96; and discount amount field 102 is configured for use in providing the monetary amount of associated fare discount 96. For example, in order for a particular passenger to be eligible for the fare discount with discount code "FD3" in discount code field 98c, the data elements in the passenger name record 54 must satisfy the condition specified in discount condition field 100c (i.e., the passenger is a member of the military or is affiliated with the military) in order for the passenger to be eligible for the fare discount. While discount amount field 102 portrays monetary amounts, discount amount field 102 may alternatively provide a percentage amount (e.g., a 5% price reduction) for the discount.

As another example, the fare discount associated with discount code "FD2" in row 96b requires that, in order for the passenger to be eligible and the fare discount to apply, the travel segment, as reflected by data elements 56 in the passenger name record 54, satisfies the condition that the flight associated with the travel segment is a domestic flight. As another example, the fare discount with discount code "FD1" in row 96a requires that, in order for the fare discount to apply, the data elements in the passenger name record 54 satisfy multiple conditions, i.e., that the passenger's age is less than 25 years and that a meal is includes as a special service request. As yet another example, the fare discount with discount code "FD4" in row 96d requires that, in order for the discount to apply, the passenger's date of birth in the passenger name record 54 must satisfy the condition that the passenger's age is greater than 70 years old.

Pricing system 14 may be configured to consider whether any fare discounts 96 in discount catalog 94 are fully applicable to a particular passenger name record 54, whether any discounts 96 are potentially applicable to a particular passenger name record 54, and whether any discounts 96 are not applicable to a particular passenger name record 54. To that end, the pricing system 14 includes a discount identification module 52 for use in considering potential discounts 96 with respect to the data elements in the passenger name record 54 that are supplied to the pricing system 14. Discount identification module 52 may provide relevant discounts 96 to the central server 12 for evaluation and/or storage in the passenger name record 54.

The booking agent may request a discount review and recommendation of a particular passenger name record 54 by discount identification module 52. After the booking agent enters information into the data elements of passenger name record 54, the booking agent makes a request to the central server 12 for a discount recommendation and/or identification by pricing system 14. As a result of the request, relevant data elements 56, such as passenger name, the travel segments, and the passenger date of birth, present in the passenger name record 54 at the time of the request are supplied from the central server 12 to the discount identification module 52 at the pricing system 14. For each travel segment, discount identification module 52 thereafter collects the available discounts 96 from discount catalog 94 in database 48. To determine the applicability of the discounts 96 to the travel segments in the passenger name record 54, the discount identification module 52 may then serially consider the fare discount 96 in each row of the discount catalog 94 by comparing the data elements 56 of passenger name record 54 that are supplied to it by the central system 12 with the one or more conditions specified in the discount condition field 100 associated with each fare discount 96.

As an example, discount identification module 52 may select the fare discount in row 96b from discount catalog 94. The discount code in row 96b provides a $10 fare discount under the condition that the travel segment is a domestic flight (i.e., the origin and destination are not within the same country). The discount identification module 52 determines that the exemplary travel segment, i.e., a flight from Denver to Cancun is not a domestic flight and, on that basis, determines that the fare discount associated with discount code "FD2" is not applicable to the passenger associated with passenger name record 54 because the associated condition is not satisfied. Similarly, discount identification module 52 may determine from the passenger's date of birth that the passenger is not over the age of 70, as specified in the discount condition field of the fare discount in row 96d. Based on this determination that the requisite condition is not satisfied, discount identification module 52 determines that the fare discount associated with discount code "FD4" is not applicable to the passenger associated with passenger name record 54.

Referring now to FIGS. 4 and 5, discount identification module 52 may collect one or more fare discounts in the discount catalog 94 that include one or more conditions that cannot be determined based on the data elements 56 from the passenger name record 54 that are provided from the central server 12 to the discount identification module 52 at the pricing system 14. For example, discount identification module 52 may select the fare discount in row 96c of the discount catalog 94. The condition associated with the discount code "FD3" in discount condition field 100 is directed to whether a passenger is in the military, is a member of a military service, or otherwise has a military affiliation. Because the information from the passenger name record 54 relating to military affiliation was not supplied to the discount identification module 52 by the central server 12, the discount identification module 52 cannot determine whether the passenger associated with passenger name record 54 is in the military and, therefore, whether the condition specified in discount condition field 100c is satisfied. However, subject to verification at the central server 12 based on the content of the data elements 56 in the passenger name record 54, the condition specified in the discount condition field for fare discount 96a may be satisfied, and the fare discount "FD3" is supplied to the central server 12 as a discount recommendation that requires additional information to determine applicability.

As another example, discount identification module 52 may select the fare discount of row 96a from discount catalog 94. Discount 96a includes discount identifier "FD1" in discount code field 98a, and includes multiple separate and distinct discount conditions specified in discount condition field 100a. One condition of the fare discount is the passenger must be under the age of 25 and another condition of the fare discount is a special service request for a meal on the associated segment is present in the passenger name record. The passenger is eligible for the fare discount "FD1" only if both of these conditions are satisfied. With respect to the condition relating to age, the discount identification module 52 determines the passenger's age from the date of birth, which is February 3, 1990 for this particular passenger. To that end, discount identification module 52 may compare the current date with the passenger's date of birth to determine the passenger age. The discount identification module 52 may also consider the special service request condition, but may lack sufficient information to determine whether the condition relating to a special service request for a meal is satisfied. However, subject to verification at the central server 12 based on the content of the data elements 56 in the passenger name record 54, the condition specified in the discount condition field for fare discount "FD 1" may be satisfied, and the fare discount "FD1" is supplied to the central server 12 as a discount recommendation that requires additional information to determine applicability.

The applicable fare discounts and potentially applicable fare discounts (i.e., discount recommendations) are communicated from the pricing system 14 to the central server 12. Potentially applicable discounts are reviewed by central server 12 based on the content of the data elements 56 in the passenger name record 54. If central server 12 determines from this information that all conditions associated with a potentially applicable discount are satisfied, central server 12 stores the fare discount as a fully applicable fare discount in passenger name record 54. If central server 12 determines one or more conditions of a potentially applicable discount remain indeterminate, central server 12 may store the discount as a potentially applicable discount in passenger name record 54. If central server 12 determines the discount is not applicable, the discount may be discarded.

For example, the central server 12 may consider whether the indeterminate conditions for fare discounts that have discount codes "FD3 and "FD1". As a specific example, the discount identification module 52 may examine the content of the special service request field 89 to determine whether a special service request for a meal is present. If so and considering that the threshold age condition is satisfied, the passenger is eligible for the fare discount associated with discount code "FD1" because the conditions for its applicability are fully satisfied. The central server 12 stores the discount code "FD 1" in the fare discount section 80 of passenger name record 54 to reflect the applicability of discount "FD1" when the travel segments are eventually priced. As shown in FIG. 4, the discount code field 90 of row 82a in the fare discount section 80 includes a reference to the discount code "FD1". Similarly, the optional discount amount field 90 in row 82a of the fare discount section 80 may include the applicable discount correlated with discount code "FD1".

As another specific example, the central server 12 may examine the content of the military service field 70 in passenger name record 54 with regard to the applicability of the fare discount associated with discount code "FD3". However, as shown in FIG. 4, the military service field 70 is blank. Therefore, the central server 12 cannot determine whether the passenger associated with passenger name record 54 is in the military and whether the condition specified in discount condition field 100c is satisfied. However, subject to verification, the condition specified in discount condition field 100c may be satisfied, and is supplied from the central server 12 to the travel agent as a recommendation that requires additional information to determine applicability. To that end, the central server 12 may modify the discount code "FD3" to read "FZ3", which is entered into the discount code field 90 in row 82a of the fare discount section 80. Changing "D" to "Z" will indicate to the booking agent that this is a potentially applicable fare discount subject to gathering more information to determine its applicability, as opposed to a fully applicable fare discount.

When the passenger name record 54 is reviewed by the booking agent, the booking agent can detect that additional information is required to determine whether the potentially applicable discount 96 may be satisfied. The booking agent interface to central server 12 may be configured such that the potentially applicable discount flag is read and noted by the user interface at the client to draw the booking agent's attention thereto. The booking agent may be in direct communication with the passenger either in person or on the phone, which may permit the booking agent to obtain necessary information quickly and efficiently from the passenger. In the present example, the booking agent would observe that a discount code "FZ3" for a recommended fare discount that may be potentially applicable (i.e., the fare discount associated with discount code "FD3") is present in passenger name record 54. The booking agent may ask the passenger whether he or she is a member of the military and/or whether the passenger has any military affiliation. After acquiring positive information indicating that the passenger is eligible for this fare discount, the booking agent may enter the information into the field for the related data element in the passenger name record 54.

The booking agent or passenger may communicate a request to central server 12 during the interactive session for conversion of any recommended fare discounts "FZs" in passenger name record 54 into fare discounts "FDs". Upon receiving the request, the central server 12 reviews passenger name record 54 and converts or amends FZs into FDs, as applicable, within the data elements of the passenger name record 54. For example, the fare discount associated with discount code "FD3" may now be applicable as noted by data added to the military service field 70 in the passenger name record 54.

After all applicable discounts 96 are entered into the fare discount section 80 passenger name record 54, the booking agent may submit a request to the central system 12 to price the fare for the itinerary in the passenger name record 54. The central system 12 passes the request to the pricing engine 50, which obtains the standard base fare for the associated segment from a fare catalog and applies applicable discounts 96 to the base fare (possibly by consulting the fare discount catalog), and thereafter returns the fare for the priced itinerary to the central system 12 to communication to the booking agent. The passenger is free to review the fares associated with the passenger name record 54 and proceed with the booking process. The booking agent and the passenger can be confident in knowing the priced fare is the lowest possible price available for the particular passenger as discount identification module 52 reviews all possible discounts 96 in discount catalog 94 for applicability. The booking agent is no longer required to mentally remember all available discounts 96 and manually associate applicable discounts 96 with passenger name record 54.

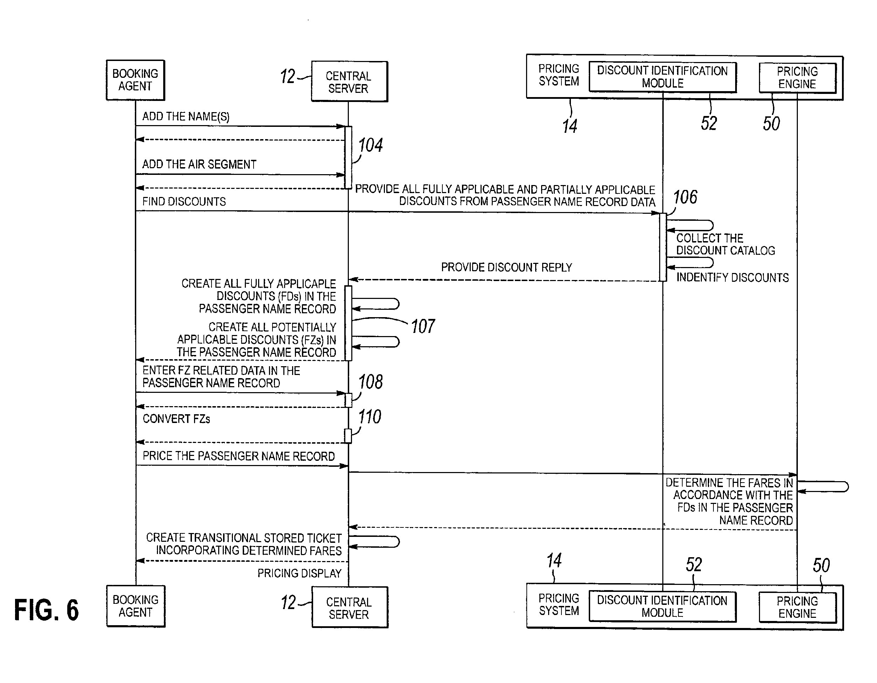

Referring now to FIG. 6, a general process for pricing a fare in accordance with the invention is shown and diagrammed therein. The process starts with the booking agent interacting with central server 12 through a process block 104. In process block 104, the booking agent gathers information from the passenger and interacts with the central server 12 to create a booking file populated with data elements. In this example, the booking file is in the form of a passenger name record. The passenger name record contains data for certain mandatory data elements along with data for any other data elements that may be available to the booking agent. The mandatory data may include one or more passenger names and the travel segments (e.g., air segments) for each passenger. After all mandatory data and any additional data available to the booking agent is entered into the passenger name record, the booking agent submits a request for discount identification along with the passenger name record to the central server 12. The central server communicates data from the data elements to the discount identification module 52 of pricing system 14, and requests that the discount identification module 52 provide all available fare discounts in response.

In accordance with a process block 106, discount identification module 52 receives the request and collects the discount catalog. The discount catalog may reside locally within pricing system 14 or may be a separate or distributed component. Discount identification module 52 next steps through each discount contained within the discount catalog and compares the data elements of the passenger name record that are supplied to it by the central system 12 with the conditions associated with each fare discount to determine applicable fare discounts. The discount identification module 52 communicates fare discounts that are associated with conditions that are fully satisfied and fare discounts that are associated with conditions that are potentially or partially satisfied to the central server 12.

In process block 107, the central server 12 determines whether the populated data elements in the passenger name record satisfy conditions for those fare discounts that are indicated by the discount identification module 52 to be potentially or partially satisfied. The central server 12 stores those fare discounts associated with conditions that are fully satisfied by information contained within the passenger name record in the passenger name record. In this example, fully applicable discounts are stored with "FD" discount codes. Similarly, central server 12 stores those fare discounts associated with conditions that are potentially or partially satisfied by information contained within the passenger name record in the passenger name record. In this example, potentially applicable discounts are stored with "FZ" discount codes. The naming convention of temporarily changing the discount codes from "FD" to "FZ" within the passenger name record represents a flag or a notification mechanism to signify that these discounts are not fully applicable based on the evaluation of the associated conditions and that they require additional information to determine final applicability based on condition satisfaction. After process block 107, central server 12 notifies the booking agent that the procedure responsive to the request for identification/recommendation of discounts is completed and the passenger name record has been updated with fare discount information.

In process block 108, the booking agent reviews the updated passenger name record, and specifically reviews any entries made within the fare discount section. Any discounts in the passenger name record and noted as being potentially applicable discounts are highlighted to the booking agent for review and consideration. The booking agent may attempt to collect additional information from the passenger that may prove relevant in converting a potentially applicable discount into a fully applicable discount. For example, the booking agent may need to inquire about the passenger's nationality or place of birth for use in potentially applicable discounts that require such information. After the booking agent has acquired additional information in an attempt to convert potentially application discounts into fully applicable discounts, process block 108 proceeds to a process block 110.

Process block 110 provides a mechanism for the booking agent to request a conversion of any potentially applicable discounts directly into fully applicable discounts within the passenger name record. The conversion may be accomplished by submitting a conversion request to central server 12. Central server 12 considers the updated passenger name record and the potentially applicable discounts and converts any FZs to FDs that are now fully applicable based on the data elements in the passenger name record. If a different convention or method is used for signifying which discounts are fully applicable and which discounts are potentially applicable, central server 12 removes the particular type of flag within passenger name record associated with potentially applicable discounts to convert those discounts into fully applicable discounts.

After process block 110, the booking agent is presented with the passenger name record with all fully applicable discounts noted in the passenger name record. After process block 110, the booking agent makes a request to through the central server 12 to the pricing engine 50 of pricing system 14 to price the fare for the passenger name record in accordance with all of the fully applicable discounts stored within fare discount section 80. After pricing engine 50 receives the request to price the fare, pricing engine 50 determines the fares for the segments by retrieving base fares from a fare database and then applying the fare discounts to bias the base fares. The fares for the travel segments are communicated from the pricing system 14 back to central server 12. Central server 12 may create a transitional stored ticket incorporating these determined fares, which reserves a place for the passengers on the associated segment and sets the determined fare price for the ticket. Central server 12 thereafter provides a pricing display to the booking agent for display and review. The booking agent thereafter communicates the fares to the passenger and may proceed with the booking process.

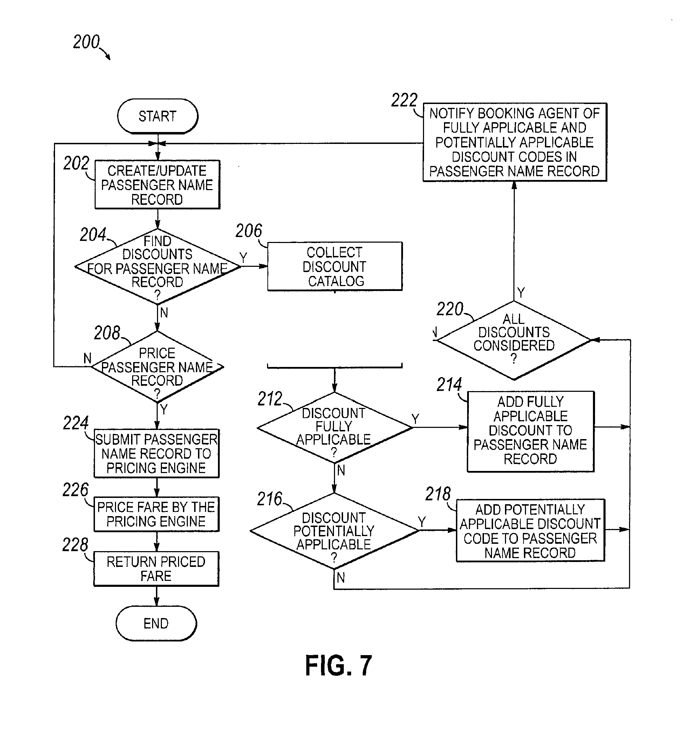

Referring now to FIG. 7, a flowchart depicts a process 200 that may be executed by pricing system 14. Process 200 begins with block 202 in which a passenger name record is initially created and/or updated. The passenger name record contains information relating to an itinerary for a passenger. The passenger name record includes data elements relating to the itinerary, for example, the passenger's name, contact information, and the travel segments at a minimum.

After the passenger name record is created and/or updated, the process block 202 proceeds to process block 204. Process block 204 determines whether the booking agent would like to find any available discounts that may be available and applicable to the passenger name record based on the data contained therein. Process block 204 determines that the booking agent wants to find all available discounts for the passenger name record ("YES" branch of process block 204), process block 204 may proceed to process block 206. Conversely, if process block 204 determines that the book agent does not want to find all applicable discounts for the passenger name record ("NO" branch of decision block 204), process block 204 may thereafter proceed to block 208.

Process block 206 collects a discount catalog containing information relating to each available discount, including one or more conditions associated with each discount which must be fulfilled in order for the discount to apply to the passenger name record. After the discount catalog is collected, process block 206 may proceed to process block 210. Process block 210 selects a discount from the discount catalog for use in determining applicability with respect to the passenger name record. Process block 210 selects a new and unconsidered discount from the discount catalog for each pass through process block 210. After a new discount is selected from discount catalog, process block 210 may proceed to process block 212.

Process block 212 determines whether the discount selected within process block 210 is fully applicable to the passenger based on the data elements of the passenger name record. Process block 212 determines that the discount selected in process block 210 is fully applicable to the passenger name record ("YES" branch of process block 212), process block 212 may proceed to process block 214. Conversely, if process block 212 determines that the discount selected in process block 210 is not fully applicable ("NO" branch of process block 212), process block 212 may proceed to a process block 216. Process block 214 adds the discount selected in process block 210 to the passenger name record. After the applicable discount is added to the passenger name record, process block 212 may proceed to process block 220.

Process block 216 may determine whether the discount selected in process block 210 is potentially applicable to the passenger name record. A discount may be potentially applicable to the passenger name record if the data elements contained within the passenger name record are indeterminate as to whether the discount is applicable to the passenger name record or not applicable to the passenger name record. For example, if the selected discount includes a condition which cannot be satisfied or is unsatisfied by the data elements contained within the passenger name record, this discount is considered to be potentially applicable. Conversely, if the condition associated with the selected discount can be affirmatively determined to be unsatisfied by the data elements within the passenger name record, the discount is considered to be not applicable as opposed to potentially applicable. For example, if the data elements within the passenger name record indicate that the passenger is under the age of 70, and the condition associated with the selected discount requires the passenger to be over than the age of 70, the fare discount is not applicable to the passenger name record.

Process block 216 determines that the discount record selected in block is potentially applicable to the passenger name record ("YES" branch of process block 216), process block 216 may proceed to process block 218. Conversely, if process block 216 determines that the discount selected in process block 210 is not potentially applicable ("NO" branch of process block 216), process block 216 may proceed to process block 220. The "NO" branch of process block 216 signifies that the discount selected in process block 210 is not applicable to the passenger name record as process block 212 determined that the selected discount was not fully applicable and process block 216 determined that the selected discount is also not potentially applicable. Therefore, the selected discount is not applicable based on the "NO" branch of process block 216.

In process block 218, the discount selected in process block 210 is added as a data element into the passenger name record. However, to distinguish between discounts stored in the passenger name record that are fully applicable and discounts stored in the passenger name record which are potentially applicable, a flag or other indicator is also stored in the passenger name record and associated with the potentially applicable discount. For example, if the discount selected in process block 210 has a discount code identifier of "FD1" process block 218 may alter this discount code to "FZ1" to indicate this discount is only potentially applicable and store "FZ1" in the passenger name record.

The process blocks 212, 214, 216, 218 of the process 200 may be performed by the central server 12 and/or the discount identification module 52 of the pricing system 14 as discussed above.

Process block 220 may determine whether all discounts within discount catalog have been considered with respect to the passenger name record. If process block 220 determines all discount records have been considered with respect to passenger name record ("YES" branch of process block 220), process block 220 may proceed to process block 222. Conversely, if process block 220 determines all discounts within discount record catalog have not been considered with respect to the passenger name record ("NO" branch of process block 220), process block 220 may proceed back to process block 210 whereby the loop comprising process block 210, process block 212, process block 214, process block 216, process block 218, and process block 220 is repeated until all discounts within the discount catalog have been considered with respect to the passenger name record.

In process block 222, process block 222 notifies the book agent of any discounts which have been determined to be either fully applicable or potentially applicable with respect to the passenger name record. After the booking agent is sufficiently notified of any discounts that may be fully applicable or potentially applicable with respect to the passenger name record, process block 222 proceeds to block 202. After process block 222 the booking agent is sufficiently notified of any discounts which may be potentially applicable with respect to the passenger name record. As such, process block 202 provides the booking agent with a mechanism for updating the passenger name record with any information that may be relevant for converting potentially applicable discounts into fully applicable discounts. For example, the booking agent may want to contact the passenger to acquire additional information and update the passenger name record with this additional information.

Process block 208 determines whether the booking agent would like to price the itinerary in the passenger name record. Process block 208 determines the booking agent does want to price the itinerary in the passenger name record ("YES" branch of process block 208), process block 208 may proceed to process block 224. Conversely, if process block 208 determines the booking agent does not want to price the itinerary in the passenger name record ("NO" branch of process block 208), process block 208 may proceed back to process block 202 for updating of the passenger name record or creation of a new passenger name record.

Process block 224 submits a request to price the itinerary in the passenger name record to the pricing engine and may proceed to process block 226. Process block 226 prices the fare in accordance with the information in the passenger name record, including the discounts stored in the passenger name record. After the fare is priced by the pricing engine, process block 226 proceeds to process block 228. Process block 228 returns the priced fare to the booking agent for use in consideration by the booking agent and the passenger. After process block 228 returns the priced fare to the booking agent, process 200 terminates.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions which are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for pricing a fare for a travel segment, the method comprising:
maintaining a discount database that includes a discount associated with a condition;
receiving, at a system, a plurality of data elements associated with a booking file, wherein the data elements include data identifying a passenger and data regarding the travel segment;
in response to receipt of the data elements, automatically accessing, by the system, the discount database to retrieve the condition associated with the discount;
automatically evaluating, by the system, the condition based on the data elements to determine whether the discount is applicable to price the fare; and
if the condition is satisfied, updating, by the system, the data elements to include a first reference related to the discount.

2. The method of claim 1 wherein the discount database further includes a discount amount associated with the discount, and further comprising:
examine, by the system, the data elements to determine whether the data elements include the first reference; and
in response to determining that the data elements include the first reference, access, by the system, the discount database to retrieve the discount amount associated with the discount.

3. The method of claim 2 further comprising:
maintaining a fare database that includes a base fare associated with the travel segment;
accessing, by the system, the fare database to retrieve the base fare; and
pricing, by the system, the fare based at least in part on the base fare and the discount amount.

4. The method of claim 1 wherein satisfaction of the condition is indeterminate based on the data elements, and further comprising:
updating the data elements to include a second reference to the discount.

5. The method of claim 4 further comprising:
examining, by the system, the data elements to determine whether the data elements include the second reference; and
in response to determining that the data elements include the second reference, updating, by the system, the data elements with at least one additional data element.

6. The method of claim 5 further comprising:
determining, by the system, whether the condition is satisfied based on the data elements that include the at least one additional data element; and
in response to satisfaction of the condition, modify, by the system, the data elements by converting the second reference to the discount into the first reference to the discount.

7. The method of claim 6 wherein the discount in the discount database further includes a discount amount associated with the discount, and further comprising:
after the data elements are modified, examining, by the system, the data elements to determine whether the data elements include the first reference; and
in response to determining that the data elements include the first reference, access the discount database to retrieve the discount amount associated with the discount.

8. The method of claim 7 further comprising:
maintaining a fare database that includes a base fare associated with the travel segment;
accessing, by the system, the fare database to retrieve the base fare; and
pricing, by the system, the fare based at least in part on the base fare and the discount amount.

9. The method of any of claims 1 to 4, wherein the at least one additional data element is received from a client computer during a communication session with the system.

10. A system for pricing a fare for a travel segment, the system comprising:
a discount database that includes a discount associated with a condition; and
at least one processor and a memory coupled in communication with the discount database, the memory including instructions that, when executed by the at least one processor, cause the system to:
receive a plurality of data elements associated with a booking file, wherein the data elements include data identifying a passenger and data regarding the travel segment;
in response to receipt of the data elements, automatically access the discount database to retrieve the condition associated with the discount;
automatically evaluate the condition based on the data elements to determine whether the discount is applicable to price the fare; and
if the condition is satisfied, update the data elements to include a first reference related to the discount.

11. The system of claim 10 wherein the discount database further includes a discount amount associated with the discount, and the instructions, when executed by the at least one processor, further cause the system to:
examine the data elements to determine whether the data elements include the first reference; and
in response to determining that the data elements include the first reference, access the discount database to retrieve the discount amount associated with the discount.

12. The system of claim 11 further comprising:
a fare database that includes a base fare associated with the travel segment,
wherein the at least one processor and the memory are coupled in communication with the fare database, and the instructions, when executed by the at least one processor, further cause the system to:
access the fare database to retrieve the base fare; and
price the fare based at least in part on the base fare and the discount amount.

13. The system of claim 1 wherein the instructions, when executed by the at least one processor, further cause the system to perform the method of any of claims 4 to 9.

14. A computer program product for pricing a fare for a travel segment, the computer program product comprising:
a non-transitory computer-readable storage medium; and
instructions stored on the non-transitory computer-readable storage medium that, when executed by a processor, cause the processor to:
maintain a discount database that includes a discount associated with a condition;
receive a plurality of data elements associated with a booking file, wherein the data elements include data identifying a passenger and data regarding the travel segment;
in response to receipt of the data elements, automatically access the discount database to retrieve the condition associated with the discount;
automatically evaluate the condition based on the data elements to determine whether the discount is applicable to price the fare; and
if the condition is satisfied, update the data elements to include a reference related to the discount.

15. The computer program product of claim 14 wherein the instructions stored on the non-transitory computer-readable storage medium cause, when executed by the processor, the processor to perform the method of any of claims 2 to 9.
